# EUROPÄISCHE PATENTSCHRIFT

(11) **EP 0 644 162 B1**
(45) Veröffentlichungstag und Bekanntmachung des Hinweises auf die Patenterteilung: **13.05.1998**
(21) Anmeldenummer: 94110317.8
(22) Anmeldetag: 02.07.1994
(51) Int. Cl.: C03B 23/11

(54) **Verfahren zur Steuerung der freien Verformung von thermoplastischem Material**
Method for controlling the free deformation of thermoplastic material
Procédé de commande de la déformation libre d'une matière thermoplastique

(30) Priorität: 21.09.1993 DE 4332024
(43) Veröffentlichungstag der Anmeldung: 22.03.1995
(73) Patentinhaber: SCHOTT ROHRGLAS GmbH, D-95448 Bayreuth (DE)
(72) Erfinder: Walter, Claus, D-95666 Mitterteich (DE); Schmitz, Paul, D-95666 Mitterteich (DE)

(56) Entgegenhaltungen:
- EP-A- 0 116 018
- DE-B- 1 093 519
- FR-A- 2 192 075
- US-A- 3 462 255

## Beschreibung

Die Erfindung betrifft ein Verfahren zur Steuerung der freien Verformung von thermoplastischem Material in einem automatisierten Prozeß zur Weiterverarbeitung des Materials zu Artikeln, insbesondere bei der Herstellung von Ampullen, Fläschchen und dergleichen aus Glasrohr, bei welchem zur Erzielung einer hohen Maßgenauigkeit der Artikel in Abhängigkeit von einem Soll/Ist-Vergleich der in einem vorgegebenen Bearbeitungsschritt erreichten Verformung eines Werkstückes im Verformungsbereich ein Korrektureingriff über die Wärmeeinwirkung auf das Ausgangsmaterial in der Aufheizphase erfolgt, wobei die Größe der Verformung von Einflußgrößen, wie z. B. der Einwirkzeit der Brenner, dem Heizwert des Gases, der zeitlichen Konstanz der Mengen an Gas, Sauerstoff und Verbrennungsluft, der Temperatur, der Zugluft, dem fortschreitenden Verbrauch und den geometrischen Maßen des Glasrohres abhängt.

Verfahren der oben genannten Art sind insbesondere in der Hohlglasverarbeitung von Bedeutung. Unter Hohlglasverarbeitung werden alle Arbeitsgänge verstanden, bei denen aus vorgeformtem Rohglas ein neuer Gegenstand erzeugt wird. In der Regel geschieht dies durch Verformung unter Einwirkung von Hitze. Glasrohr aller Art ist häufig Ausgangsprodukt für Waren der Hohlglasverarbeitenden Industrie.

In diesem Zusammenhang sind insbesondere die im Wege der Hohlglasverarbeitung aus Glasrohr hergestellten Ampullen, Trinkampullen, Fläschchen und Tablettenröhrchen zu nennen, die die pharmazeutische Industrie in riesigen Mengen zur Abfüllung ihrer Erzeugnisse benötigt. Damit sie die Hochleistungsabfüllautomaten der pharmazeutischen Industrie problemlos durchlaufen können, müssen sie exakt und maßgenau in präzise arbeitenden Automaten erzeugt sein.

Als Beispiel für solche automatisierten Verfahren wird im folgenden ohne Beschränkung der Allgemeinheit die Ampullenfertigung auf der sog. MM 30 (= ein 30 Stationen Vertikalautomat der Fa. Moderne Mecanique, F-77507 Chelles Cedex) beschrieben. Einzelheiten zu dieser Maschine sind beispielsweise in Firmenschriften enthalten.

Zur Herstellung von Ampullen aus Glasrohr auf der MM 30 werden in obere und untere Spannfutter Glasrohre eingespannt. Diese Einspannstellen sind auf einem Karussell angeordnet und werden von oben mit Glasrohren beschickt. Die zu verformenden Zonen des Rohres werden zwischen den im Gleichlauf drehenden, fluchtenden Spannfuttern bis zur erforderlichen Verarbeitungstemperatur erhitzt. Darauf folgt der Bearbeitungsschritt. Die Verformung erfolgt durch Einschnüren, Ziehen oder Stauchen, mittels Flammeneinwirkung bzw. durch Absenken oder Anheben der unteren Spannfutter. Die Bearbeitungsmaschine besteht aus 30 solcher Einspannstationen verteilt über den Umfang des Karussells. Die Aufheizung der zu bearbeitenden Stelle des Rohres erfolgt über eine Anzahl stationärer Brenner die schwenkbar gelagert sind und über eine maximal mögliche Strecke der Karusselldrehung folgen können und auf das Glasrohr einwirken. Es wird eine Ampulle pro Einspannstation und Karussellumdrehung erzeugt.

In der Technik wird dieser Prozeß als "Freie Verformung" bezeichnet, d. h. Verformung ohne formgebende Festkörper. Die Größe der Verformung hängt lediglich von den eingangs genannten Einflußgrößen ab. Diese unterliegen zeitlichen Schwankungen und bedingen daher Schwankungen in der freien Formgebung.

Bei der Ampullenfertigung spielt die freie Verformung insbesondere bei der Spießausbildung eine maßgebliche Rolle: Zur Spießausbildung wird das Ausgangsglasrohr vorerst im Spießbereich so lange erhitzt, bis das Glas erweicht ist und sich in dem Glasrohr aufgrund der Oberflächenspannung des Glases eine Einschnürung ausbildet. Anschließend wird der Ampullenspieß fertig ausgezogen. Der Spießdurchmesser und die Wanddicke im Spießbereich hängen dabei von dem Durchmesser und der Wanddicke der ursprünglich vorhandenen Einschnürung ab.

Um eine schnelle und sichere Befüllung der Ampullen in den eingangs erwähnten Hochleistungsautomaten der pharmazeutischen Industrie zu gewährleisten, werden an den Ampullenspieß hinsichtlich seiner Maßgenauigkeit hohe Anforderungen gestellt. Insbesondere bei Durchmesser und Zentrizität des Ampullenspießes sind sehr enge Toleranzen einzuhalten. Beispielsweise sei mitgeteilt, daß der Spießdurchmesser einer 5 ml-Ampulle nach dem oben dargestellten Verfahren um bis zu ± 0,5 mm schwanken kann. Von den weiterverarbeitenden Unternehmen wird aber die Einhaltung von Toleranzen von maximal ± 0,2 mm gefordert.

Um hier eine Verbesserung zu erzielen, wurde von der Fa. Techner Ltd., 33 Great James Street, London, WC1N 3HB, ein Verfahren zur Steuerung der Spießausbildung entwickelt, das beispielsweise in von Techner Ltd. an Interessenten ausgegebenen Prospekten beschrieben ist.

Bei diesem Verfahren wird jeweils an der letzten Bearbeitungsstation einer an sich bekannten Ampullenfertigungsmaschine, beispielsweise der MM30, der fertige Spießdurchmesser der diese Station durchlaufenden Ampulle bestimmt und in Abhängigkeit von der Abweichung des Ist-Wertes vom Soll-Wert bei den nachfolgenden Werkstücken ein Korrektureingriff über die Aufheizung im Spießbereich vorgenommen. Dieser Verfahrensweise liegt die Annahme zugrunde, daß gleiche Wärmeeinwirkungen auf das gleiche Rohr gleiche Spieße ergeben. Die Bestimmung des Spießdurchmessers erfolgt nach Techner durch mechanisches Abtasten mittels zweier Scheiben, die im Durchmesser groß genug sind, um Verletzungen des Ampullenspießes zu vermeiden. Die Messung liefert einen einzelnen Durchmesser-Meßwert pro Spieß.

Die Aufheizung des Spießbereichs wird nach Techner entsprechend der ermittelten Durchmesserabweichung über die Mitlautzeit zweier individuell gesteuerter Brenner, welche in der Vorwärmzone auf den Spießbereich des Werkstücks einwirken, gesteuert. Der Zusammenhang zwischen Durchmesserabweichung und Mitlaufzeit wird nach Techner empirisch durch Versuche ermittelt.

Da die Messung der ereichten Verformung erst in der letzten Station unmittelbar vor Auswurf der fertigen Ampulle erfolgt, kann sich die hieraus resultierende Steuerung aber ausschließlich auf das folgende Werkstück auswirken. Ebenso bewirkt die lange Totzeit, daß kurzfristig auftretende Störungen während der Aufheizphase, wie z. B. die eingangs erwähnten Einflußgrößen auf die freie Verformung, wie Zugluft, kurzfristige Änderungen in der Menge an Gas, Sauerstoff und Verbrennungsluft, Temperatursprünge in der Umgebung usw., von der Steuerung nicht erfaßt werden.

Aufgabe der Erfindung ist ein Verfahren der eingangs genannten Art so zu entwickeln, daß die Totzeit möglichst gering ist und auch kurzfristig auftretende Störungen in der Aufheizphase durch die Steuerung ausgeglichen werden können.

Diese Aufgabe wird gelöst mit einem Verfahren mit allen Merkmalen des Patentanspruchs 1.

Das erfindungsgemäße Verfahren nutzt die Messung der Verformung zu einem Zeitpunkt, zu dem sich alle Einflußgrößen meßbar ausgewirkt haben und noch eine hinreichend große restliche Verformung besteht. Die Meßergebnisse ermöglichen die Steuerung der restlichen Verformung. Der Korrektureingriff kann daher bis auf den Fehler vom Fehler alle Einflüsse berücksichtigend erfolgen.

Dadurch, daß nach dem erfindungsgemäßen Verfahren sowohl die Messung der erreichten Verformung, als auch der Soll/Ist-Vergleich und der Korrektureingriff in der Aufheizphase in situ während der Ausbildung der Verformung erfolgen, ist die Totzeit der Steuerung gleich null. Das erfindungsgemäße Verfahren hat somit den Vorteil, daß es einen individuellen Eingriff auf den Verformungsprozeß eines jeden einzelnen Werkstücks ermöglicht.

Nachfolgend wird die Erfindung ohne Beschränkung der Allgemeinheit wegen ihrer großen Bedeutung für dieses Verfahren am Beispiel der Spießerzeugung bei der Ampullenfertigung auf der eingangs erwähnten MM30 anhand der Figuren und eines Ausführungsbeispiels näher erläutert. Die Erfindung soll jedoch hierdurch keinesfalls allein auf die Ampullenfertigung beschränkt werden. Die Erfindung als solche kann ebenso wie die im folgenden beschriebenen bevorzugten Verfahrensführungen ohne weiteres auf beliebige Verfahren zur Weiterverarbeitung von thermoplastischem Material angewandt werden, ohne daß der Fachmann hierzu erfinderisch tätig werden muß. Die prinzipielle Vorgehensweise ist bei allen Verfahren gleich und kann der nachfolgenden Beschreibung der Anwendung des Verfahrens auf die Ampullenfertigung entnommen werden. Einige Beispiele für weitere Einsatzmöglichkeiten werden weiter unten angegeben.

Es zeigen:
- Figur 1:: in einer schematischen Darstellung eine Anordnung zur Steuerung des Ampullenspießdurchmessers bei der Ampullenfertigung auf einer MM30,
- Figur 2:: die im Ausführungsbeispiel verwendete Kennlinie, die den empirisch ermittelten Zusammenhang zwischen Abweichung des Einschnürungsdurchmessers und der Mitlaufzeit der individuell gesteuerten Brenner wiedergibt,
- Figur 3:: als Beispiel für die Wirksamkeit des erfindungsgemäßen Verfahrens ein Diagramm, in welchem die Schwankungen der Spießdurchmesser bei der Ampullenfertigung auf einer MM30 bei ungeregeltem und geregeltem Betrieb einander gegenüber gestellt sind.

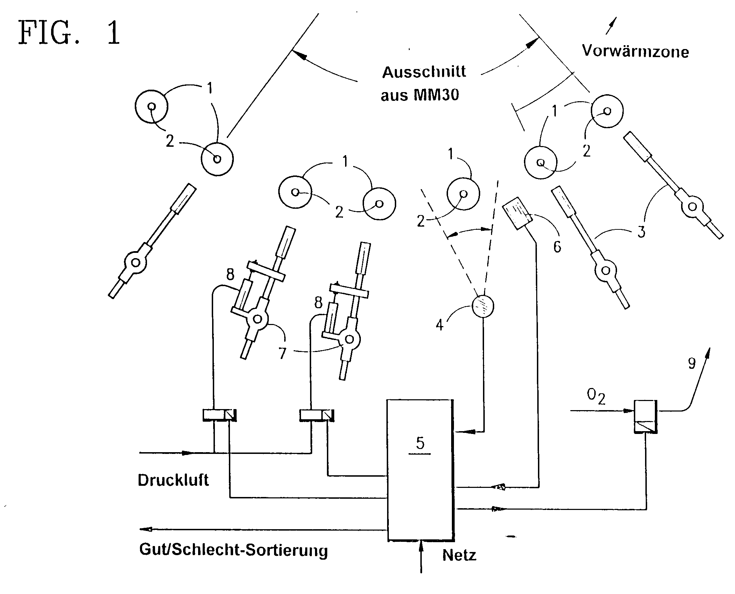

Figur 1 zeigt in einer schematischen Darstellung eine Anordnung, die zur Durchführung des erfindungsgemäßen Verfahrens bei der Ampullenfertigung, insbesondere zur Steuerung der Spießausbildung auf einer MM30 geeignet ist. Vorrichtungsteile der MM30, die bei der Durchführung des erfindungsgemäßen Verfahren keine Rolle spielen sind der Übersichtlichkeit halber in der Figur nicht dargestellt.

Man erkennt in der Figur in Spannfuttern (1) eingespannte Glasrohre (2), die auf einem durch die "Viertelkreis"-Anordnung der Brenner angedeuteten Karussell angeordnet sind. Die Aufheizung der zu bearbeitenden Stellen der Rohre, im vorliegenden Beispiel die Spießbereiche, erfolgt in der Vorwärmzone über eine Anzahl stationärer Brenner (3) (in der Regel 14 Stück), die schwenkbar gelagert sind und über eine maximal mögliche Strecke der Karusselldrehung folgen können und auf das Glasrohr (2) einwirken.

Im Anschluß an die Vorwärmung in der Vorwärmzone werden die Werkstücke/Glasrohre (2) im vorliegenden Beispiel an einer IR-Kamera (4) vorbeigeführt. IR-Kameras sind an sich bekannt und werden daher hier nicht weiter beschrieben. Die IR-Kamera (4) dient der Messung der bis zu dieser Station aufgrund der Vorwärmung bereits eingetretenen Verformung des Spießbereichs. In der Regel sind bis zu diesem Zeitpunkt etwa 80 % der Spießerwärmung bereits erfolgt, so daß für den Korrektureingriff die verbleibenden 20 % noch zur Verfügung stehen.

Die Messung der bereits eingetretenen Verformung erfolgt bei dem erfindungsgemäßen Verfahren vorzugsweise berührungslos, beispielsweise mittels optischer Dimensionssensoren.

Vorteilhafterweise wird zur berührungslosen Messung die von dem erhitzten Ausgangsmaterial ausgesandte Wärmestrahlung verwendet, wobei es sich noch als besonders günstig erwiesen hat, die von dem Werkstück ausgesandte Strahlung in einem Spektralbereich zu messen, in welchem die von den Brennerflammen abgegebene Strahlung nicht stört. Dies ist in einfacher Weise durch Zwischenschaltung eines geeigneten Filters möglich. Wird darüber hinaus die Wärmestrahlung noch in einem Spektralbereich gemessen, in dem die Strahlungsintensität unabhängig von der Materialdicke ist, so erhält man mit Hilfe der oben erwähnten IR-Kamera ein gleichmäßig ausgeleuchtetes Bild des Verformungsbereichs mit scharfen Konturen. Die Bestimmung der Abmessungen des Werkstücks im Verformungsbereich wird hierdurch wesentlich erleichtert. Ebenso ist eine exaktere Messung möglich.

Bei rohrförmigem Ausgangsmaterial besteht die freie Verformung bei Erwärmung in der Ausbildung einer Einschnürung im Verformungsbereich aufgrund der Oberflächenspannung des Glases. Es hat sich nun gezeigt, daß der Durchmesser und die Wanddicke der ursprünglich vorhandenen Einschnürung den Durchmesser und die Wanddicke des fertigen Ampullenspießes bestimmen. Das erfindungsgemäße Verfahren wird daher so durchgeführt, daß der Einschnürungsdurchmesser auf einen vorgegebenen Wert eingestellt wird, wobei der Einschnürungsdurchmesser aber einem eindeutig zugeordneten Spießdurchmesser entspricht. Bei dieser Verfahrensführung erfolgt somit der Korrektureingriff in Abhängigkeit von der Abweichung des Ist-Einschnürungsdurchmessers vom Soll-Durchmesser an ein und demselben Artikel.

Wie aus der Figur weiterhin ersichtlich ist, besitzt die IR-Kamera (4), die in der Regel 50 Messungen/Sekunde ausführt, ein ausgedehntes Gesichtsfeld. Dies hat den Vorteil, daß der Verformungsbereich, d. h. im vorliegenden Fall die Einschnürung im Spießbereich über wenigstens eine Umdrehung des Werkstücks (2) in den rotierenden Einspannfuttern (1) gemessen werden kann. Diese "Vielfachmessung" gestattet in einfacher Weise die Beurteilung der Ovalität und Exzentrität der Werkstücke (2) im Verformungsbereich. Unzulässig ovale bzw. exzentrische Spieße können damit über die in der Figur als Block dargestellte Steuerung (5) in einer Gut/Schlecht-Sortierung ausgeschieden werden.

Mit (6) ist in der Figur ein Taktgeber bezeichnet. Der Taktgeber (6) übermittelt die Periodendauer von Rohr zu Rohr und damit die maximal mögliche Mitlaufzeit der Brenner. Diese ist um die Rückstellzeit kleiner als die Periodendauer.

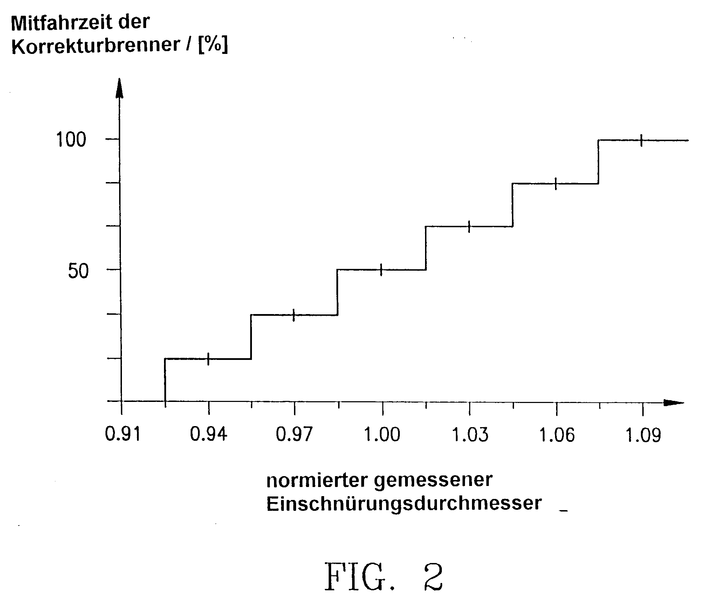

Die Steuerung (5) enthält im wesentlichen die durch Versuch ermittelte Kennlinie für den Zusammenhang zwischen der Abweichung des Ist- vom Solldurchmesser der Einschnürung und der daraus resultierenden Änderung der Steuerungsgröße. Die empirische Bestimmung dieser Kennlinie hat gegenüber möglichen Modellrechnungen den Vorteil, daß sie in der Regel genauere Ergebnisse liefert, da beispielsweise alle Maschineneinflüsse automatisch miterfaßt sind. Eine mögliche Kennlinie zeigt Figur 2. Eine Beschreibung dieser Kennlinie folgt weiter unten.

Auch bei anderen Anwendungen des erfindungsgemäßen Verfahrens können entsprechende Kennlinien empirisch ermittelt werden.

In der Figur erfolgt der Korrektureingriff über die Mitlaufzeit zweier individuell gesteuerter Brenner (7). Ebenso möglich ist ein Korrektureingriff durch sequentielles Ein/Ausschalten einer Reihe von Brennern oder durch O₂-Zusatz zu den individuell steuerbaren Brennern, wodurch nicht etwa eine Änderung in der Flammentemperatur, sondern eine Verschiebung der heißen Zone der Flamme in Richtung auf das Werkstück hin erreicht wird. Weiterhin kann der Korrektureingriff auch durch gesteuerte Abkühlung erfolgen.

Eine platzsparende und elegante Methode ist der Korrektureingriff über die Intensität, Intensitätsverteilung und/ oder Einwirkdauer elektromagnetischer Strahlung, insbesondere Laserstrahlung, da hierbei Messen und Eingreifen in einer Station stattfinden kann. Es bietet sich insbesondere die Verwendung eines CO₂-Lasers an, da es sich hierbei um eine technisch ausgereifte Entwicklung handelt, CO₂-Laser darüber hinaus preisgünstig und von hohem Wirkungsgrad sind.

Figur 2 zeigt eine Kennlinie, die für den Korrektureingriff über die zwei individuell steuerbaren Brenner geeignet ist. Es ist hierbei vorteilhaft, die Mitfahrzeit der Korrekturbrenner in ganzzahligen Vielfachen der Rotationsdauer des Rohres zu stufen, um die Bildung ovaler Spieße zu verhindern. In der Kennlinie ist die Mitfahrzeit der Korrekturbrenner über dem normierten gemessenen Einschnürungsdurchmesser aufgetragen. Die Kennlinie wurde gewonnen, indem beide Korrektureingriffe auf 50 % gestellt wurden und die Brenner der Vorwärmstrecke und die individuell steuerbaren Brenner so eingestellt wurden, daß die mittleren erzeugten Spießdurchmesser dem gewünschten Soll-Spießdurchmesser entsprechen (herkömmliche bekannte Einstellung der Maschine). Danach wurde geprüft, ob bei vollem Eingriff der individuell steuerbaren Brenner die entstehenden Spießdurchmesser 0,4 mm unter dem Soll-Durchmesser und bei minimalem Eingriff 0,4 mm über dem Soll-Durchmesser erzeugt werden. Im Falle einer Abweichung werden iterativ Vorfeuer und Korrekturfeuer verbessert.

Vorteilhafterweise erfolgen bei dem erfindungsgemäßen Verfahren die Messung, Auswertung (= Soll/Ist-Vergleich und Umsetzung in Steuersignale) sowie die Steuerung computerunterstützt.

Die Bestimmung der Änderungsgeschwindigkeit des Einschnürungsdurchmessers kann in Fällen sinnvoll sein, in denen diese besonders hoch ist.

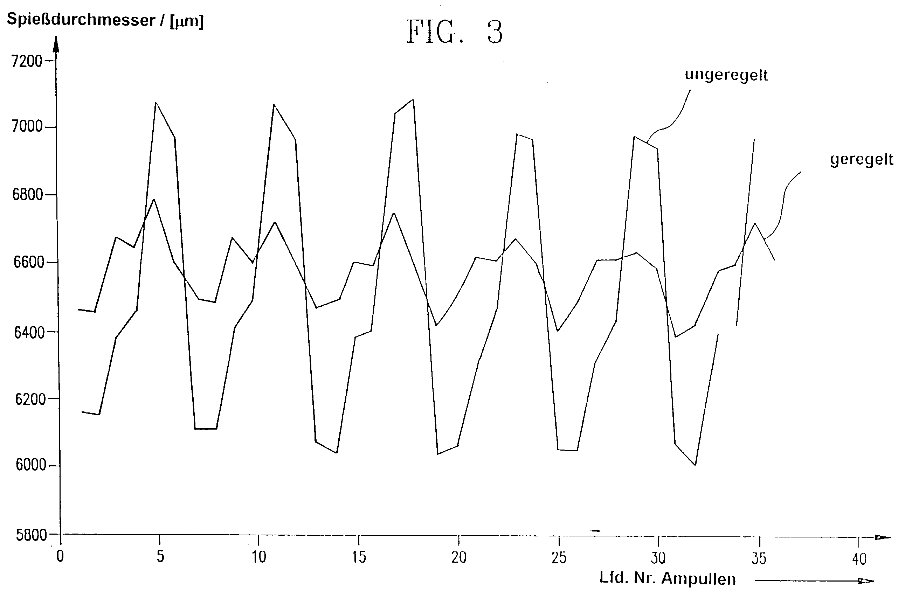

Neben der oben beschriebenen individuellen Steuerung ist es vorteilhaft, pauschale Einflüsse auf die Spießdurchmesserbildung durch Regelung der stationären Brennergruppe aufzufangen, um den mittleren Durchmesser der gemessenen Einschnürung beim mittleren Korrektureingriff der individuell steuerbaren Brenner zu halten: ein Wegdriften des Einschnürungsdurchmessers in Bereiche, die der Korrektur nicht mehr zugänglich sind, wird dadurch weitgehend vermieden. Für den Pauschaleingriff wird der O₂-Zusatz zu den stationären Brennern (in Fig. 3 Bezugszeichen (9)), beispielsweise mittels eines Dreipunkt-Schrittreglers, verstellt. Regelgröße ist der Bruchteil der Mitlaufzeit, der mit einer großen Ausgleichszeit auf 50 % gehalten wird.

Weiterhin können bei dem erfindungsgemäßen Verfahren die Ergebnisse des Soll/Ist-Vergleichs auch noch zur Korrektur benachbarter Formgebungen herangezogen werden.

Ampullen, deren gemessener Einschnürungsdurchmesser außerhalb des noch korrigierbaren Bereiches liegen, werden nach dem erfindungsgemäßen Verfahren analog zu den Ampullen mit unzulässig ovalen oder exzentrischen Spießen über die Sortierung ausgeschieden.

Die Erzeugung einer kontrollierten Einschnürung ist nicht nur bei der Spießausbildung von Ampullen vorteilhaft, sondern beispielsweise auch bei der Bodenformung bei Ampullen und Fläschchen sowie bei letzteren auch zur Vorgabe einer einheitlich konditionierten Glasmasse zur Schulter- und Mündungsformung. Auch andere kontinuierliche Verfahren, die sich der freien Verformung bedienen, können im Hinblick auf die Genauigkeit geometrischer Größen des Endprodukts von der Anwendung der Erzeugung einer kontrollierten Einschnürung profitieren: z. B. Verfahren zum Wiederziehen von Stäben und Röhren, insbesondere Mikropipetten und Kapillaren. Die mit der IR-Kamera aufgenommenen Daten enthalten Informationen über den Bearbeitungszustand des Glases, die zusätzlich zur Verbesserung der nachfolgenden Bearbeitungsschritte genutzt werden können: Boden, Einengung, Trichter.

### Ausführungsbeispiel:

Gemäß dem oben beschriebenen Verfahren wurden in einem Ausführungsbeispiel auf einer MM30 aus 16,5 mm Glasrohr 5 ml-Ampullen unter Verwendung der erfindungsgemäßen Steuerung des Einschnürungsdurchmessers gefertigt. Zum Vergleich wurden auch Ampullen auf herkömmliche Art und Weise, d. h. bei ungeregeltem Betrieb der MM30 hergestellt. Die Versuchsergebnisse sind aus Fig. 3 ersichtlich.

Die Versuchsanordnung bei geregeltem Betrieb entsprach der in Fig. 1 dargestellten. Der Verformungsbereich wurde dabei mittels einer IR-Kamera gemessen. Bei der verwendeten Anordnung war die sich ausbildende Einschnürung auf einer Strecke von ca. 100 mm im Gesichtsfeld der Kamera, die ca. 50 Messungen pro Sekunde ausführt. Zur Unterdrückung der IR-Lichtaussendung der benachbarten Flammen und wegen der Emissivität des Glases wurde mittels eines Interferenzfilters nur Strahlung aus dem Spektralbereich zwischen 4,25 µm und 4,30 µm auf den Blei-Selenid-Detektor der Kamera gelassen. Der Soll/Ist-Vergleich der gemessenen Einschnürung und die Umsetzung der gemessenen und mit Hilfe der in Fig. 2 dargestellten Kennlinie in Steuersignale für die Mitlaufzeit der zwei individuell gesteuerten Brenner zur Erzielung einer vorgegebenen Einschnürung erfolgte computerunterstützt.

Unter Berücksichtigung des Durchlaufs des Rohres bedeutet 100 % Mitlaufzeit: beide Brenner maximal; 50 % Mitfahrzeit: Brenner A maximal, Brenner B ohne Eingriff; 0 % beide Brenner ohne Eingriff. Relative Mitfahrwege zwischen 0 und 50 % sowie zwischen 50 und 100 % werden durch Ausdrücken mittels Druckluftzylinder (8) vom mitnehmenden Spannfutter (1) erzeugt.

Man erkennt in Fig. 3, daß bei herkömmlichem Betrieb der MM30 (ungeregelt) erhebliche Schwankungen der Spießdurchmesser auftreten (in der Figur bewegen sich die Durchmesser zwischen 6,0 und 7,1 mm), während bei geregeltem Betrieb die Durchmesserschwankungen nur geringfügig sind (in der Figur zwischen 6,4 und 6,8 mm).

Dieses Ergebnis wurde mit Ausgangsglasrohren, die paarweise mit kleinstzulässiger Wanddicke, mittlerer und höchst-zulässiger Wanddicke (die genauen Zahlenwerte der Wanddicken sind in diesem Zusammenhang unerheblich) ausgesucht waren, erreicht.

## Patentansprüche

1. Verfahren zur Steuerung der freien Verformung von thermoplastischem Material in einem automatisierten Prozeß zur Weiterverarbeitung des Materials zu Artikeln, insbesondere bei der Herstellung von Ampullen, Fläschchen und dergleichen aus Glasrohr,
bei welchem zur Erzielung einer hohen Maßgenauigkeit der Artikel in Abhängigkeit von einem Soll/Ist-Vergleich der in einem vorgegebenen Bearbeitungsschritt erreichten Verformung eines Werkstücks (2) im Verformungsbereich ein Korrektureingriff über die Wärmeeinwirkung auf das Ausgangsmaterial in der Aufheizphase erfolgt, wobei die Größe der Verförmung von Einflußgrößen, wie z. B. der Einwirkzeit der Brenner, dem Heizwert des Gases, der zeitlichen Konstanz der Mengen an Gas, Sauerstoff und Verbrennungsluft, der Temperatur, der Zugluft, dem fortschreitenden Verbrauch und den geometrischen Maßen des Glasrohres, abhängt,
**dadurch gekennzeichnet,**
daß die Messung der Verformung, der Soll/Ist-Vergleich und der Korrektureingriff in situ während der Ausbildung der Verformung in der Aufheizphase an ein und demselben Werkstück (2) vorgenommen werden, wobei der Soll/Ist-Vergleich zu einem Zeitpunkt vorgenommen wird, zu dem sich alle Einflußgrößen bereits meßbar auf die Verformung ausgewirkt haben, aber noch eine hinreichend große restliche Verformung besteht, und auf der Basis der Meßergebnisse aus diesem Vergleich die Steuerung der restlichen Verformung erfolgt.

2. Verfahren nach Anspruch 1,
**dadurch gekennzeichnet**
daß die Messung der Verformung des wärmeweichen Materials berührungslos erfolgt.

3. Verfahren nach Anspruch 2,
**dadurch gekennzeichnet,**
daß die Messung mittels optischer Dimensionssensoren ausgeführt wird.

4. Verfahren nach Anspruch 2 oder 3,
**dadurch gekennzeichnet,**
daß die berührungslose Messung über die von dem erhitzten Ausgangsmaterial ausgesandte Wärmestrahlung erfolgt.

5. Verfahren nach Anspruch 4,
**dadurch gekennzeichnet,**
daß die Wärmestrahlung in einem Spektralbereich gemessen wird, in welchem die von den Brennerflammen ausgesandte Strahlung nicht stört.

6. Verfahren nach Anspruch 4 oder 5,
**dadurch gekennzeichnet,**
daß die Wärmestrahlung in einem Spektralbereich gemessen wird, in welchem die Strahlungsintensität unabhängig von der Materialdicke ist.

7. Verfahren nach wenigstens einem der Ansprüche 1 bis 6,
**dadurch gekennzeichnet,**
daß bei rohrförmigem Ausgangsmaterial (2) der Durchmesser der sich bei Erwärmung ausbildenden Einschnürung auf einen vorgegebenen Wert eingestellt wird.

8. Verfahren nach Anspruch 7,
**dadurch gekennzeichnet,**
daß die zeitliche Änderung des Einschnürungsdurchmessers während des Verformungsprozesses ermittelt wird.

9. Verfahren nach wenigstens einem der Ansprüche 1 bis 8,
**dadurch gekennzeichnet,**
daß die Umsetzung der Ergebnisse des Soll/Ist-Vergleichs der erreichten Verformung in entsprechende Steuersignale für den Korrektureingriff auf den weiteren Verformungsprozeß über empirisch ermittelte Kennlinien erfolgt.

10. Verfahren nach wenigstens einem der Ansprüche 1 bis 9,
**dadurch gekennzeichnet,**
daß die Ergebnisse des Soll/Ist-Vergleichs auch zur Korrektur der benachbarten Formgebungen herangezogen werden.

11. Verfahren nach wenigstens einem der Ansprüche 1 bis 10,
**dadurch gekennzeichnet,**
daß der Korrektureingriff über die Mitlaufzeit individuell steuerbarer Brenner (7) und/oder durch sequentielles Ein/Ausschalten einer Reihe von Brennern erfolgt. von Brennern erfolgt.

12. Verfahren nach Anspruch 11,
**dadurch gekennzeichnet,**
daß der Korrektureingriff über den O₂-Zusatz zu den individuell steuerbaren Brennern erfolgt.

13. Verfahren nach wenigstens einem der Ansprüche 1 bis 12,
**dadurch gekennzeichnet,**
daß der Korrektureingriff über die Intensität, die Intensitätsverteilung und/oder die Einwirkdauer elektromagnetischer Strahlung erfolgt.

14. Verfahren nach Anspruch 13,
**dadurch gekennzeichnet,**
daß die Strahlung eines CO₂-Lasers verwendet wird.

15. Verfahren nach wenigstens einem der Ansprüche 1 bis 14,
**dadurch gekennzeichnet,**
daß der Korrektureingriff durch gesteuerte Abkühlung erfolgt.

16. Verfahren nach wenigstens einem der Ansprüche 1 bis 15,
**dadurch gekennzeichnet,**
daß die Messung, Auswertung und Steuerung computergestützt erfolgt.

17. Verfahren nach wenigstens einem der Ansprüche 1 bis 16,
**dadurch gekennzeichnet,**
daß der Durchmesser des rohrförmigen Werkstücks (2) im Einschnürungsbereich mittles einer IR-Kamera (4) abgetastet wird.

18. Verfahren nach wenigstens einem der Ansprüche 1 bis 17,
**dadurch gekennzeichnet,**
daß ein weiterer Korrektureingriff über die O₂-Zufuhr zu den Brennern (3) der Vorwärmstrecke erfolgt, um den mittleren Durchmesser der gemessenen Einschnürung beim mittleren Korrektureingriff der individuell steuerbaren Brenner (7) zu halten.

19. Verfahren nach wenigstens einem der Ansprüche 7 bis 18,
**dadurch gekennzeichnet,**
daß zur Erkennung und Ausscheidung von Werkstücken mit unzulässig ovalen oder exzentrischen Einschnürungen die Dimension und laterale Position der Einschnürung der Werkstücke während mindestens einer Umdrehung gemessen wird.

## Claims

1. Method for controlling the free deformation of thermoplastic material in an automated process for further processing materials into articles, in particular in the manufacture of ampoules, small bottles and the like from glass tube,
in which in order to achieve a high dimensional accuracy of the articles, there takes place in the deformation zone, depending on a desired/actual comparison of the deformation of a work piece (2) achieved in a predetermined processing step, a correcting intervention by way of the effect of heat on the starting material in the heating phase, with the size of the deformation being dependent on influencing variables such as, for example, the effect time of the burner, the calorific value of the gas, the constancy over time of the quantities of gas, oxygen and combustion air, the temperature, the draught, and the progressive consumption and the geometric dimensions of the glass tube,
characterised in that
on one and the same work piece (2) the deformation is measured, the desired/actual comparison is made, and the correcting intervention is undertaken, in situ during the effecting of the deformation in the heating phase, with the desired/actual comparison being made at a point in time at which all the influencing variables have already affected the deformation in measurable manner, yet there remains still to be effected a sufficiently large deformation, and the deformation which remains to be effected is controlled from the latter comparison based on the measuring results.

2. Method according to Claim 1,
characterised in that
the deformation of the heat-softened material is measured in contactless manner.

3. Method according to Claim 2,
characterised in that measuring is carried out by means of optical dimension sensors.

4. Method according to Claim 2 or 3,
characterised in that the contactless measuring takes place by way of the thermal radiation emitted by the heated starting material.

5. Method according to Claim 4,
characterised in that the thermal radiation is measured in a spectral region in which the radiation emitted by the burner flames is not disruptive.

6. Method according to Claim 4 or 5,
characterised in that the thermal radiation is measured in a spectral region in which the radiation intensity is independent of the thickness of the material.

7. Method according to at least one of Claims 1 to 6,
characterised in that in the case of a tubular starting material (2) the diameter of the constriction which forms on heating is adjusted to a predetermined value.

8. Method according to Claim 7,
characterised in that the change over time in the diameter of the constriction is detected during the deformation process.

9. Method according to at least one of Claims 1 to 8,
characterised in that the results of the desired/actual comparison deformation achieved are converted by way of empirically determined characteristic lines into corresponding control signals for the correcting intervention in the further deformation process.

10. Method according to at least one of Claims 1 to 9,
characterised in that the results of the desired/actual comparison are also utilised for correcting adjacent imparted forms.

11. Method according to at least one of Claims 1 to 10,
characterised in that the correcting intervention takes place by way of the following time of individually controllable burners (7) and/or as a result of the sequential switching on and off of a series of burners.

12. Method according to Claim 11,
characterised in that the correcting intervention takes place by way of the O₂ addition to the individually controllable burners.

13. Method according to at least one of Claims 1 to 12,
characterised in that the correcting intervention takes place by way of the intensity, the intensity distribution and/or the duration of the effect of electromagnetic radiation.

14. Method according to Claim 13,
characterised in that the radiation of a CO₂ laser is used.

15. Method according to at least one of Claims 1 to 14,
characterised in that the correcting intervention takes place as a result of controlled cooling.

16. Method according to at least one of Claims 1 to 15,
characterised in that measurement, interpretation and control take place in computer-aided manner.

17. Method according to at least one of Claims 1 to 16,
characterised in that the diameter of the tubular work piece (2) in the constriction zone is scanned by means of an IR camera (4).

18. Method according to at least one of Claims 1 to 17,
characterised in that there takes place a further correcting intervention by way of the O₂ supply to the burners (3) of the preheating zone, in order to maintain the average diameter of the measured constriction at the average correcting intervention of the individually controllable burners (7).

19. Method according to at least one of Claims 7 to 18,
characterised in that the dimension and lateral position of the constriction of the work pieces is measured for at least one revolution in order to recognise and separate work pieces having inadmissibly oval or eccentric constrictions.

## Revendications

1. Procédé de contrôle de la déformation libre d'un matériau thermoplastique dans un processus automatisé pour la transformation du matériau en articles, notamment dans la fabrication d'ampoules, de flacons et similaires fabriqués à partir de tube de verte,
selon lequel, pour obtenir une précision dimensionnelle élevée des articles, on procède à une correction par le biais de l'action de la chaleur sur le matériau de base pendant la phase de chauffage en fonction d'une comparaison consigne/réel de la déformation d'une pièce (2) dans la zone de déformation obtenue au cous d'une étape de travail, la valeur de la déformation dépendant de grandeurs d'influence telles que par exemple la durée d'action des brûleurs, le pouvoir calorifique du gaz, la constance dans le temps des débits de gaz oxygène et air de combustion, la température, les courants d'air, la consommation croissante et les dimensions géométriques du tube de verre,
caractérisé par le fait que la mesure de la déformation, la comparaison consigne/réel et la correction sont efffectuées in situ pendant la réalisation de la déformation au cours de la phase de chauffage sur une seule et même pièce (2), la comparaison consigne/réel étant réalisée à un instant où l'action de toutes les grandeurs d'influence sur la déformation est déjà mesurable mais où il subsiste encore une déformation résiduelle suffisante et la commande de la déformation résiduelle ayant lieu sur la base des résultats de mesure de cette comparaison.

2. Procédé selon la revendication 1, caractérisé par le fait que la mesure de la déformation du matériau ramolli par la chaleur a lieu sans contact.

3. Procédé selon la revendication 2, caractérisé par le fait que la mesure est réalisée à l'aide de détecteurs de dimensions optiques.

4. Procédé selon la revendication 2 ou 3, caractérisé par le fait que la mesure sans contacts a lieu par le biais du rayonnement thermique émis par le matériau de base chauffé.

5. Procédé selon la revendication 4, caractérisé par le fait que l'on mesure le rayonnement thermique dans un domaine du spectre dans lequel le rayonnement émis par les flammes des brûleurs n'est pas gênant.

6. Procédé selon la revendication 4 ou 5, caractérisé par le fait que l'on mesure le rayonnement thermique dans un domaine du spectre dans lequel l'intensité du rayonnement ne dépend pas de l'épaisseur du matériau.

7. Procédé selon au moins une des revendications 1 à 6, caractérisé par le fait que dans le cas d'un matériau de base (2) tubulaire, le diamètre de l'étranglement qui se forme lors du chauffage est réglé à une valeur prédéterminée.

8. Procédé selon la revendication 7, caractérisé par le fait que l'on détermine la variation dans le temps du diamètre de l'étranglement pendant le processus de déformation.

9. Procédé selon au moins une des revendications 1 à 8, caractérisé par le fait que la conversion des résultats de la comparaison consigne/réel de la déformation obtenue en signaux de commande adaptés pour la correction de la suite du processus de déformation est effectuée à l'aide de courbes caractéristiques déterminées de manière empirique.

10. Procédé selon au moins une des revendications 1 à 9, caractérisé par le fait que les résultats de la comparaison consigne/réel sont utilisés également pour corriger les formes voisines.

11. Procédé selon au moins une des revendications 1 à 10, caractérisé par le fait que la correction est opérée par le biais de la durée d'accompagnement de brûleurs (7) commandés individuellement et/ou par fonctionnement/arrêt séquentiel d'une série de brûleurs.

12. Procédé selon la revendication 11, caractérisé par le fait que la correction est opérée par le biais de l'apport de O₂ aux brûleurs commandés individuellement.

13. Procédé selon au moins une des revendications 1 à 12, caractérisé par le fait que la correction est opérée par le biais de l'intensité, de la répartition de l'intensité et/ou de la durée d'action de rayonnement électromagnétique.

14. Procédé selon la revendication 13, caractérisé par le fait que l'on utilise le rayonnement d'un laser CO₂.

15. Procédé selon au moins une des revendications 1 à 14, caractérisé par le fait que la correction est opérée par refroidissement contrôlé.

16. Procédé selon au moins une des revendications 1 à 15, caractérisé par le fait que la mesure, l'exploitation et la commande sont assistées par ordinateur.

17. Procédé selon au moins une des revendications 1 à 16, caractérisé par le fait que l'on palpe le diamètre de la pièce (2) tubulaire dans la zone de l'étranglement à l'aide d'une caméra infrarouge (4).

18. Procédé selon au moins une des revendications 1 à 17, caractérisé par le fait que l'on procède à une correction supplémentaire par le biais de l'apport de O₂ aux brûleurs (3) de la zone de préchauffage afin de maintenir le diamètre moyen de l'étranglement mesuré à une valeur de correction moyenne des brûleurs (7) commandés individuellement.

19. Procédé selon au moins une des revendications 7 à 18, caractérisé par le fait que pour détecter et éliminer les pièces avec un étranglement présentant une ovalisation ou une excentricité non admissible, on mesure la dimension et la position latérale de l'étranglement des pièces sur au moins une rotation.
